# EUROPEAN PATENT APPLICATION

(11) **EP 3 492 384 A1**
(43) Date of publication of application: **05.06.2019**
(21) Application number: 17382813.8
(22) Date of filing: 01.12.2017
(51) Int. Cl.: B64D 37/06, B64C 3/34, B67D 7/06

(54) **FUEL TANK WITH SUCTION SYSTEM**

(71) Applicant: Airbus Operations, S.L., 28906 Getafe (ES)
(72) Inventor: Angulo Ibáñez, Fernando, 28906 Madrid (ES)

(57) **Abstract**

This invention is relative to a fuel tank (300) with suction system (100), comprising:
- a flexible hose (150) comprising a first (151) and a second (152) extremities, said second extremity (152) comprising an orifice (154) fit to be connected to the first orifice (113) of the first pipeline (110) via a connection point (440),
- the first extremity (151) of said flexible hose (150) being fastener to a floating system (155) and comprising at least one orifice (153), such as the orifice (153) is a suction point always able to supply the engines (430) from the upper layer (310) of fuel (300) available inside the tank (200), in order to avoid water and dirt from the lower layer (320).

## Description

### FIELD OF THE INVENTION

The present invention relates to a fuel tank with suction system. More specifically, the invention is relative to a Fuel tank with suction system able to feed an Auxiliary Power Unit.

### BACKGROUND

An APU (Auxiliary Power Unit) is a gas turbine engine which is used in aircraft to provide electrical and/or pneumatic power to various aircraft systems and components. The APU is controlled and monitored by an ECB (Electronic Control Box).

When an aircraft is in ground mode, its main source of electrical power and compressed air for cabin conditioning is provided by the APU. The APU is able to power the aircraft and the ECS (Environmental Control Systems), drive the pneumatic starters systems for the MES (Main Engines Start). When an aircraft is in flight mode, the APU is able to provide pneumatic and/or electric power to the aircraft.

APUs are generally located in the aft fuselage module of the aircraft, at or near the tail cone section, but said APU is commonly fed in fuel via the wings tanks.

Indeed, nowadays, a suction point is fixed and located in the lower part of a fuel tank of each main wing, mainly to guarantee that the APU will be fed by fuel even with low quantity of fuel in the tanks.

However, some water enters into the aircraft fuel tanks with the uplifted fuel, when the fuel is mixed or dissolved, and during in-breathing, when humid air enter to tank as tank gauge decreases. During the descent of the aircraft, water vapor becomes liquid with the increase of ambient temperature.

For large range aircraft, with a huge wing tanks, this quantity of water can be of several hundred of liters.

Due to the differences of density between water and Jet fuel, because water is denser than fuel, water precipitates to lowest parts of the tanks, creating at least several phases, a lower layer of water, an upper layer of fuel, and between these layers a slight mixed-phase.

Aircraft fuel tanks are drained of water on a regular basis, but sometimes the amount of water between draining task can be significant. Free water in the tanks can give rise to some problems of engine performance, specifically for APU engines because much more susceptible to water ingestion that main engines.

### SUMMARY OF THE INVENTION

In order to solve the drawbacks stated above, the present invention propose will allow that the APU be always supplied with the clearest, cleanest, and waterfree fuel from the upper level of the tank. The main advantage of the invention is to avoid the suction from the lower area of the tank in which water and/or dirt tent to accumulate.

Another advantage of this invention and not the least is to keep exactly the piping and the APU pump as nowadays, but only adapt the current suction point. This would minimize the mechanical complexity and additional parts counts, the modifications required, and would be easy implementable to retrofit aircrafts already on the market.

The present invention is relative to a fuel tank with suction system, said tank comprising within at least two layers of fuel, with a lower layer being denser than the upper layer, said suction system comprising :
- a first pipeline comprising respectively a first and a second extremities, said extremities comprising respectively a first and a second orifice,
- a second pipeline comprising respectively a first and a second extremities, said extremities, comprising respectively a first and a second orifice,
- a third pipeline comprising respectively a first and a second extremities, said extremities, comprising respectively a first and a second orifice,
- such as the second orifice of the first pipeline is connected to the first orifice of the second pipeline via a vacuum pump,
- the second orifice of the second pipeline is connected to the first orifice of the third pipeline via a valve,
- the first orifice of the third pipeline is connected to a fuel engine,
characterized in that, said suction system comprises:
- a flexible hose comprising a first and a second extremities, said second extremity comprising an orifice fit to be connected to the first orifice of the first pipeline via a connection point,
- the first extremity of said flexible hose being fastener to a floating system and comprising at least one orifice, such as the orifice is a suction point always able to supply the engine from the upper layer of fuel available in the tank, in order to avoid water and potential dirt from the lower layer.

According to the invention, the connection point is an articulation point, such as the hose is able to move freely with respect to the first pipeline;

According to the invention, the flexible hose is retractable, such as when the first extremity of the flexible hose is moving down according to the level of fuel available in the tank, the hose length is reducing, and when the first extremity of the flexible hose is moving up according to the level of fuel available in the tank, the hose length is increasing;

According to the invention, the floating system is a buoy;

According to the invention, the first extremity of the flexible hose is only able to move vertically via a fixed guiding element inside the tank, while the level of fuel available change.

According to the invention, the guiding element can be a rail, a rod or a profile, made from metal or composite material.

According to the invention, the suction point of the first extremity of the flexible hose is located at some centimeters below the floating element, between 1 and 3 centimeters in order to be sure that the suction point is fed with fuel air-free and dirt-free.

According to the invention, the tank can be housed inside an aircraft wing or a horizontal tail cone.

The present invention is also relative to an APU (Auxiliary Power Unit) fed in fuel via a fuel tank with suction system according to the present invention.

### BRIEF DESCRIPTION OF THE DRAWINGS

To complete the description and in order to provide for a better understanding of the invention, a set of drawings is provided. Said drawings form an integral part of the description and illustrate preferred embodiments of the invention. The drawings comprise the following figures:
- Figure 1, is a schematic representation of a fuel tank with suction system according to the state of art;
- Figure 2, is a schematic representation of a fuel tank with suction system according to one embodiment of the invention;

### DETAILED DESCRIPTION OF THE DRAWINGS

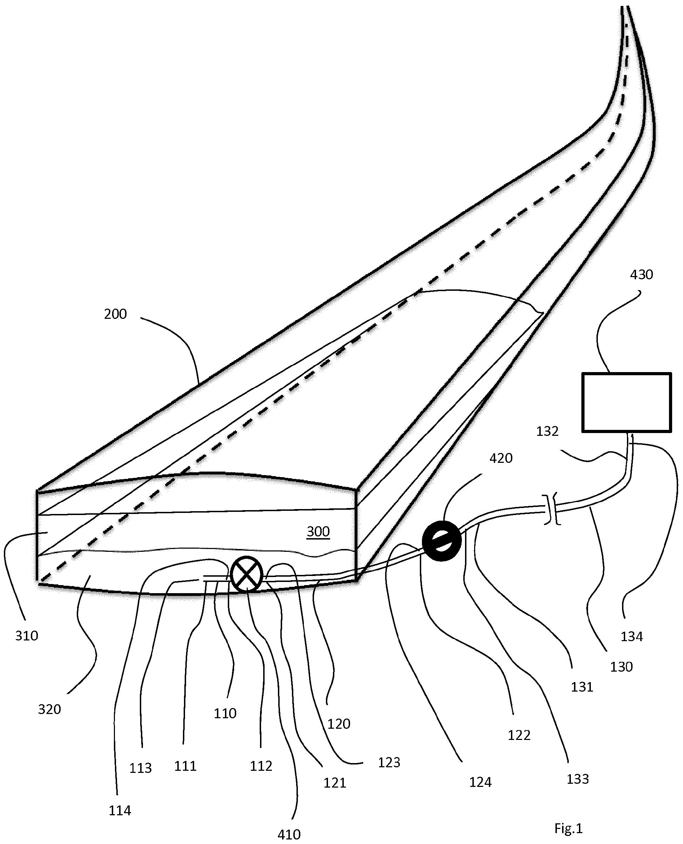

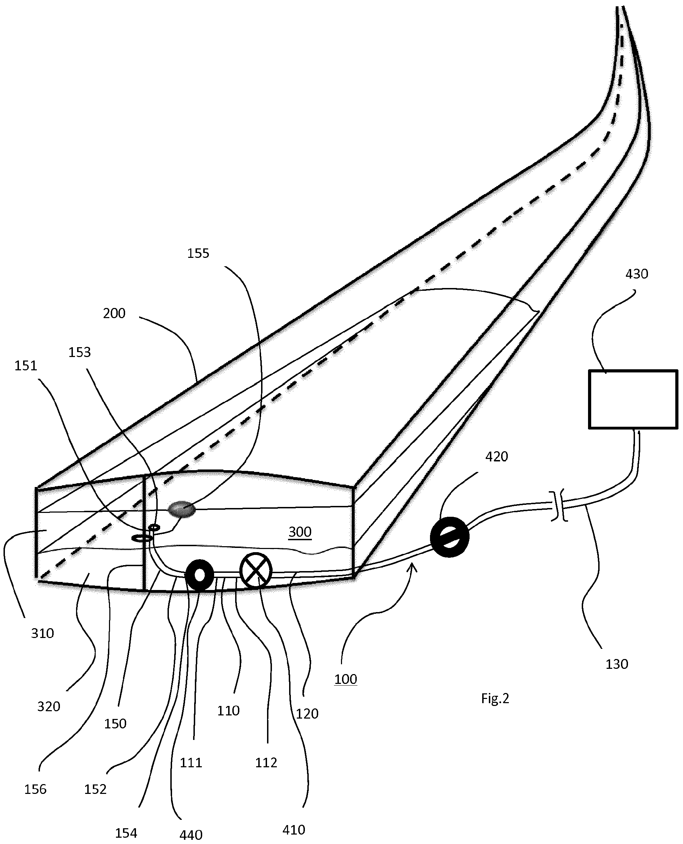

The present invention is directed generally toward a fuel tank with suction system. A person skilled in the relevant art will understand, however, that the invention may have additional embodiments, and that the invention may be practiced without several of the details of the embodiments described below with reference to figures 1 and 2.

**Figure 1** is a schematic representation of a fuel tank **200** with suction system **100** according to the state of art. The **figure 1** describes a part of aircraft wing, comprising inside the fuel tank **200** in order to feed a set of thermic/fuel engines **430** of said aircraft. Indeed, in commercial aircraft, fuel tank **200** is usually housed in the main aircraft wing and/or in the (HTP) Horizontal Tail Plane. In a list non-exhaustive, the set of thermic engines comprises at least the main engines and additionally the (APU) Auxiliary Power Unit. In this schematic representation, the tank **200** is not fully filled and comprises at least two layers **310, 320** of fuel **300,** an upper layer **310** and a lower layer **320.** The lower layer **320** is water or a mixture of water with fuel which is denser than the upper layer **310** which is pure fuel. The suction system **100** of the state of art comprises a set of pipelines **110, 120, 130** such as a first pipeline **110** comprising respectively a first **111** and a second **112** extremities, said extremities **111, 112** comprising respectively a first **113** and a second **114** orifice. Said suction system **100** comprises a second pipeline **120** comprising respectively a first **121** and a second **122** extremities, said extremities **121, 122** comprising respectively a first **123** and a second **124** orifice. The suction system **100** comprises also a third pipeline **130** comprising respectively a first **131** and a second **132** extremities, said extremities **131, 132** comprising respectively a first **133** and a second **134** orifice.

The set of pipelines **110, 120, 130** are successively connected together, such as the second orifice **114** of the first pipeline **110** is connected to the first orifice **123** of the second pipeline **120** via a vacuum pump **410.** The second orifice **124** of the second pipeline **120** is connected to the first orifice **133** of the third pipeline **130** via a valve **420.** The first orifice **133** of the third pipeline **130** is connected to a set of fuel engines **430,** such as the APU (Auxiliary Power Unit) and/or the main aircraft engines.

This set of pipelines **110, 120, 130** is arranged and interconnected together such as according to the needs of the engines **430,** the vacuum pump **410** is able to lead the fuel **300** available in the tank **200** via the first orifice **113** of the first pipeline **110** considered in the state of art as a suction point, to the engines **430** through the valve **420.** Unfortunately, the localization of the first orifice **113** strategically positioned in the lower part of the tank **200** in order to guarantee that the engines **430** is supplied with fuel **300** during its working. The main difficulty met in this kind of disposition of suction point, according to the state of art, is an inappropriate ingestion of water or dirt by the engines **430,** which could drive to dramatic consequences for the engines **430.**

The present invention wishes to fulfill the lacks of the suction system **100** of the state of art adding a retrofit technical solution, as shown in **figure 2****.** The suction system **100** according to the invention comprises a flexible hose **150** comprising a first **151** and a second **152** extremities, said second extremity **152** comprising an orifice **154** fitted to be connected to the first orifice **113** of the first pipeline **110** via a connection point **440.-**The first extremity **151** of said flexible hose **150** being fastened to a floating system **155** and comprising at least one orifice **153,** such as the orifice **153** becomes a suction point always able to supply the engines **430** from the upper layer **310** of fuel **300** available inside the tank **200,** in order to avoid water and dirt from the lower layer **320.** The set of orifice **153** presents a real advantage in order to avoid to block the suction if one these orifices **153** was clogged because dirt presence. This set of orifice **153** work consequently as a filter. Another advantage of this embodiment is to allow to the flexible hose **150** to follow dynamically the level of fuel **300** available in the tank **200** and particularly the best layer, the upper one **310.**

In another embodiment, the connection point **440** is an articulation point, such as the hose **152** is able to move rotationally freely with respect to the first pipeline **110.**

In another embodiment, the flexible hose **150** is retractable, such as when the first extremity **151** of the flexible hose **150** is moving down according to the level of fuel **300** available in the tank **200,** the hose length is reducing. When the first extremity **151** of the flexible hose **150** is moving up according to the level of fuel **300** available in the tank **200,** the hose length is increasing.

In another embodiment, the floating system **155** is a buoy.

In another embodiment, the first extremity **151** of the flexible hose **150** is only able to move vertically via a guiding element **156** inside the tank **200,** while the level of fuel **300** available in the tank **200** changes.

In another embodiment, the guiding element **156** can be a rail, or a rod with a ring or a profile, said guiding element **156** being made from metal or composite material.

In another embodiment, the suction point of the first extremity **151** of the flexible hose **150** is located some centimeters below the floating system **155** in order to be sure that the suction point is fed with fuel **300** without air and potential dirt.

In another embodiment, the fuel tank **200** can be housed inside an aircraft wing or a HTP (Horizontal Tail Plane).

Another object of the invention is an Auxiliary Power Unit **430** fed with fuel **300** via a suction system **100** according to the invention.

From the foregoing, it will be appreciated that specific embodiments of the invention have been described herein for purposes of illustration, but that various modifications may be made without deviating from the spirit and scope of the invention. For example, aspects of the invention described in the context of particular embodiments may be combined or eliminated in other embodiments. Although advantages associated with certain embodiments of the invention have been described in the context of those embodiments, other embodiments may also exhibit such advantages. Additionally, none of the foregoing embodiments need necessarily exhibit such advantages to fall within the scope of the invention. Accordingly, the invention is not limited except as by the appended claims.

## Claims

1. Fuel tank (200) with suction system (100), said tank (200) comprising at least two layers (310, 320) of fuel (300), with a lower layer (320) being denser than the upper layer (310), said suction system (100) comprising:
- a first pipeline (110) comprising respectively a first (111) and a second (112) extremities, said extremities (111, 112) comprising respectively an orifice (113, 114),
- a second pipeline (120) comprising respectively a first (121) and a second (122) extremities, said extremities (121, 122), comprising respectively an orifice (123, 124),
- a third pipeline (130) comprising respectively a first (131) and a second (132) extremities, said extremities (131, 132), comprising respectively an orifice (133, 134),
- such as the second orifice (114) of the first pipeline (110) is connected to the first orifice (123) of the second pipeline (120) via a vacuum pump (410),
- the second orifice (124) of the second pipeline (120) is connected to the first orifice (133) of the third pipeline (130) via a valve (420),
- the second orifice (134) of the third pipeline (130) is connected to a fuel engine (430),
**characterized in that**, said suction system (100) comprises:
- a flexible hose (150) comprising a first (151) and a second (152) extremities, said second extremity (152) comprising an orifice (154) fit to be connected to the first orifice (113) of the first pipeline (110) via a connection point (440),
- the first extremity (151) of said flexible hose (150) being fastener to a floating system (155) and comprising at least one orifice (153), such as the orifice (153) is a suction point able to supply the engine (430) from the upper layer (310) of fuel (300) available within the tank (200), in order to avoid water and dirt from the lower layer (320).

2. Fuel tank (200) with suction system (100) according to claim 1, **characterized in that** the connection point (440) is an articulation point, such as the hose (152) is able to move freely with respect to the first pipeline (110).

3. Fuel tank (200) with suction system (100) according to any preceding claims, **characterized in that** the flexible hose (150) is retractable, such as when the first extremity (151) of the flexible hose (150) is moving down according the level of the fuel (300) available in the tank (200), the hose length is reducing, and when the first extremity (151) of the flexible hose (150) is moving up according the level of the fuel (300) available in the tank (200), the hose length is increasing.

4. Fuel tank (200) with suction system (100) according to any preceding claims, **characterized in that** the floating system (155) is a buoy.

5. Fuel tank (200) with suction system (100) according to any preceding claims, **characterized in that** the first extremity (151) of the flexible hose (150) is only able to move vertically via a fixed guiding element (156) inside the tank (200), while the level of fuel (300) available change.

6. Fuel tank (200) with suction system (100) according to any preceding claims, **characterized in that** the guiding element (156) can be a rail, a rod or a profile, made from metal or composite material.

7. Fuel tank (200) with suction system (100) according to any preceding claims, **characterized in that** the suction point of the first extremity of the flexible hose (150) is located between 1 and 3 centimeters below the floating system (155) in order to be sure that the suction point is fed with fuel (300) without air and without potential floating dirt.

8. Fuel tank (200) with suction system (100) according to any preceding claims, **characterized in that** the fuel tank (200) can be housed inside an aircraft wing or a HTP (Horizontal Tail Plane).

9. Auxiliary Power Unit (430) fed with fuel (300) via a fuel tank (200) with suction system (100) according to any preceding claims.
